# EUROPEAN PATENT SPECIFICATION

(11) **EP 2 549 792 B1**
(45) Date of publication and mention of the grant of the patent: **01.03.2017**
(21) Application number: 11768450.6
(22) Date of filing: 15.04.2011
(51) Int. Cl.: H04L 12/855, H04L 12/911, H04W 28/10, H04W 92/04

(54) **FLOW CONTROL METHOD, DEVICE AND SYSTEM**
FLUSSSTEUERUNGSVERFAHREN, -VORRICHTUNG UND -SYSTEM
PROCÉDÉ, DISPOSITIF ET SYSTÈME DE CONTRÔLE DE FLUX

(30) Priority: 16.04.2010 CN 201010153049
(43) Date of publication of application: 23.01.2013
(73) Proprietor: Huawei Technologies Co., Ltd., Longgang District Shenzhen, Guangdong 518129 (CN)
(72) Inventor: YUAN, Chaohao, Shenzhen Guangdong 518129 (CN); YE, Sihai, Shenzhen Guangdong 518129 (CN); DONG, Ying, Shenzhen Guangdong 518129 (CN); XU, Ridong, Shenzhen Guangdong 518129 (CN); ZHU, Daoming, Shenzhen Guangdong 518129 (CN); JIN, Haiwei, Shenzhen Guangdong 518129 (CN)
(74) Representative: Goddar, Heinz J.
(86) International application number: PCT/CN2011/072879
(87) International publication number: WO 2011/127839

(56) References cited:
- CN-A- 1 722 867
- CN-A- 1 852 235
- CN-A- 101 009 631
- KR-A- 20070 013 621
- US-A1- 2005 122 942
- US-A1- 2006 274 688
- US-B2- 7 286 831
- KPN ET AL: "APN based congestion control: Update Stage 2 text based on CT1's feedback", 3GPP DRAFT; S2-105951, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jacksonville; 20101115, 18 November 2010 (2010-11-18), XP050469623, [retrieved on 2010-11-18]
- HUAWEI: "GGSN overload control", 3GPP DRAFT; C4-102494_CR ON GGSN OVERLOAD CONTROL R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Barcelona; 20101011, 2 October 2010 (2010-10-02), XP050447639, [retrieved on 2010-10-02]
- "3rd Generation Partnership Project; Technical Specification Group Services and System Aspects; General Packet Radio Service (GPRS) enhancements for Evolved Universal Terrestrial Radio Access Network (E-UTRAN) access (Release 9)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 25 March 2010 (2010-03-25), pages 1-258, XP050402066, [retrieved on 2010-03-25]
- 3GPP: '3rd Generation Partnership Project;Technical Specification Group Services and System Aspects;System Improvements for Machine-Type Communications;(Release 10)' INTERNET ARTICLE, [Online] 22 March 2010, Retrieved from the Internet: <URL:http://www.3gpp.org/ftp/Specs/archive/ 23_series/23.888/23888-032.zip> [retrieved on 2014-06-04]
- SHIAO-LI TSAO ED - INSTITUTE OF ELECTRICAL AND ELECTRONICS ENGINEERS: "Scalable gateway GPRS support node for GPRS/UMTS networks", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 4, 24 September 2002 (2002-09-24), pages 2239-2243, XP010608831, DOI: 10.1109/VETECF.2002.1040618 ISBN: 978-0-7803-7467-6

## Description

### FIELD OF THE INVENTION

The present invention relates to mobile communication technologies, and in particular, to a flow control method, device, and system.

### BACKGROUND OF THE INVENTION

To balance work loads of network elements, load sharing needs to be performed in a procedure that a terminal accesses a core network. An existing load sharing process of a packet switched (Packet Switched, PS) domain is roughly as follows: the terminal sends an activation request message to a serving general packet radio service (General Packet Radio Service, GPRS) support node (Serving GPRS Support Node, SGSN), where an access point name (Access Point Name, APN) is carried in the activation request message; and the SGSN determines a gateway GPRS support node (Gateway GPRS Support Node, GGSN) participating in the load sharing according to the APN, and then, assigns the activation request message to a certain GGSN according to a load sharing algorithm. When a GGSN is faulty or is overloaded, the SGSN still assigns the activation request message to the GGSN, the GGSN returns a failure message carrying a cause value, and the SGSN assigns, to other GGSNs according to the cause value carried in the failure message, the activation request message sent by the terminal.

US 2005/122942 A1 relates to a method of balancing a load in a GPRS network. In the method, the SGSN receives an Activate PDP Context Request message from the mobile node and extracts an APN from the Activate PDP Context Request message. Then the SGSN searches for GGSNs capable of supporting GPRS for the extracted APN and selects a GGSN having a smallest number of established sessions by comparing the numbers of the sessions established with the searched GGSNs to each other. The GGSN sends a Create PDP Context Response message with session configuration information used to identify a session to the SGSN, so that the SGSN can search the stored session configuration information for ascertaining the number of sessions established with each of the GGSNs.

US 2006/274688 A1 discloses a subscriber data function (SDF) in an access gateway node. To perform load balancing, the SGSN can select an SDF that is not overloaded. The control protocol between the SGSN and SDFs includes notification of SDF loading in terms of percentage of maximum number of sessions and remaining committed bit rate. Every message sent from the SDF to an SGSN contains this information. Each SGSN stores the current loading of each SDF so that the SGSN can select a non-overloaded SDF during an SDF selection phase.

3GPP TR 23.888 v0.3.2 discloses a signalling congestion control. Signalling network nodes that may suffer from MTC related signalling congestion include all PS domain control plane nodes and gateways. With large scale attach requests, mainly the SGSN/MME is vulnerable. With connection requests, also the SGSN/MME is vulnerable as this node has a relative large load per connection request. GGSNs/PGWs are especially vulnerable as often M2M applications use a dedicated APN which will be terminated at one GGSN/PGW. All connection requests for that particular application will then have to be handled by a single GGSN/PGW. In order to combat signalling congestion, network nodes shall be able to reject attach or connection requests. And it shall be possible to reduce signalling load of connection requests for a specific APN or from MTC Devices belonging to a particular MTC Group on the SGSN/MME and/or GGSN/PGW. The SGSN/MME and/or GGSN/PGW can reject connection requests targeted at a particular APN. When the MTC application uses a dedicated APN, the specific MTC application can be targeted that causes the congestion.

The prior art at least has the following problem: a large quantity of resources of SGSN and GGSN are consumed in the load sharing procedure, resulting in waste of network element resources.

### SUMMARY OF THE INVENTION

Embodiments of the present invention provide two alternative flow control methods, and two alternative access devices according to claims 1-4, so as to solve a problem of waste of network element resources in a flow control method in the prior art.

It may be learned from the foregoing technical solutions, according to the embodiments of the present invention, the flow control is first performed on the processing procedure of the activation request message according to the pre-obtained control information, so that the number of the activation request messages assigned to the gateway device does not exceed the number of the activation request messages that the gateway device can process, which may avoid that after a GGSN is already overloaded, an SGSN still sends the activation request message to the overloaded GGSN, and achieve saving of network element resources.

### BRIEF DESCRIPTION OF THE DRAWINGS

To illustrate the technical solutions in the embodiments of the present invention more clearly, accompanying drawings needed for describing the embodiments are introduced briefly in the following. Obviously, the accompanying drawings in the following description are some embodiments of the present invention, and persons of ordinary skill in the art may further obtain other accompanying drawings according to these accompanying drawings without making creative efforts.
FIG. 1 is a schematic flow chart of a method according to a first embodiment of the present invention;
FIG. 2 is a schematic flow chart of a method according to a second embodiment of the present invention;
FIG. 3 is a schematic flow chart of a method according to a third embodiment of the present invention;
FIG. 4 is a schematic flow chart of a method according to a fourth embodiment of the present invention;
FIG. 5 is a schematic flow chart of a method according to a fifth embodiment of the present invention;
FIG. 6 is a schematic flow chart of a method according to a sixth embodiment of the present invention;
FIG. 7 is a schematic flow chart of a method according to a seventh embodiment of the present invention;
FIG. 8 is a schematic flow chart of a method according to an eighth embodiment of the present invention;
FIG. 9 is a schematic structural diagram of an access device according to a ninth embodiment of the present invention;
FIG. 10 is a schematic structural diagram of an access device according to a tenth embodiment of the present invention;
FIG. 11 is a schematic structural diagram of a gateway device according to an eleventh embodiment of the present invention; and
FIG. 12 is a schematic structural diagram of a system according to a twelfth embodiment of the present invention.

### DETAILED DESCRIPTION OF THE EMBODIMENTS

In order to make the objectives, technical solutions, and advantages of the present invention more clear, the technical solutions in the embodiments of the present invention are clearly and completely described in the following with reference to the accompanying drawings in the embodiments of the present invention. Apparently, the described embodiments are merely part of rather than all of the embodiments of the present invention. All other embodiments obtained by persons of ordinary skill in the art based on the embodiments of the present invention without making creative efforts shall fall within the protection scope of the present invention.

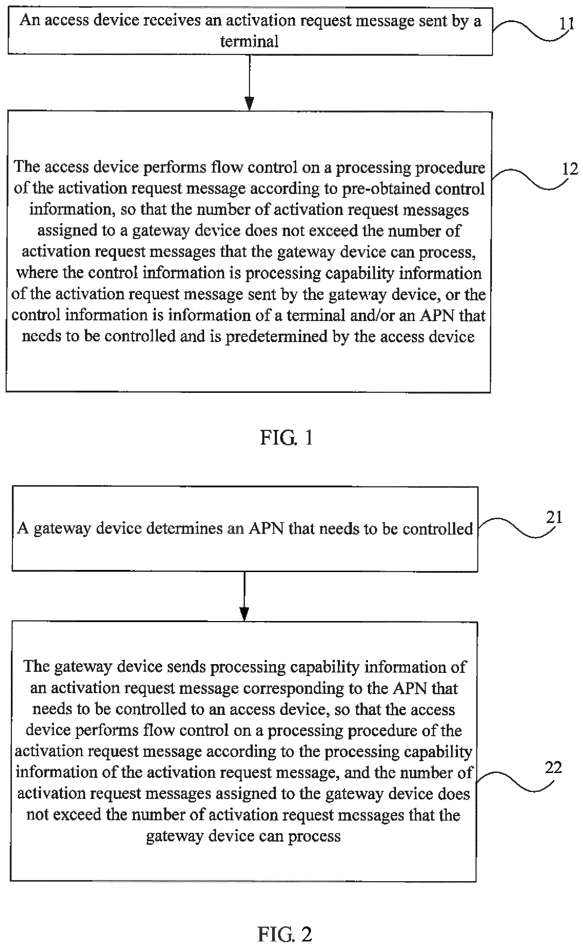

FIG. 1 is a schematic flow chart of a method according to a first embodiment of the present invention, including:
Step 11: An access device receives an activation request message sent by a terminal.
Step 12: The access device performs flow control on a processing procedure of the activation request message according to pre-obtained control information, so that the number of activation request messages assigned to a gateway device does not exceed the number of activation request messages that the gateway device can process, where the control information is processing capability information of the activation request message sent by the gateway device, or the control information is information of a terminal and/or an APN that needs to be controlled and is predetermined by the access device.

In this embodiment and the following embodiments, for a PS domain, the access device may be an SGSN, and the gateway device may be a GGSN; for a system architecture evolution (System Architecture Evolution, SAE) network, the access device may be a serving gateway (Serving Gateway, SGW) or a mobile management entity (Mobile Management Entity, MME), and the gateway device may be a packet data network (Packet Data Network, PDN) gateway (PDN Gateway, PGW). In different systems, names of the terminal may be different. For example, in a 2^{nd} generation mobile communication system, the terminal is a mobile station (Mobile Station, MS), while in a 3^{rd} generation mobile communication system and subsequent mobile communication systems, the terminal is a user equipment (User Equipment, UE), and so on.

The pre-obtained control information may be sent by the gateway device and received by the access device, and also may be predetermined by the access device itself. The information of the terminal that needs to be controlled may be a terminal identity.

Performing the flow control may be assigning the activation request message to another gateway device, and also may be directly discarding the activation request message.

In this embodiment, the flow control is first performed on the processing procedure of the activation request message according to the pre-obtained control information, so that the number of the activation request messages assigned to the gateway device does not exceed the number of the activation request messages that the gateway device can process, which may avoid that after the GGSN is overloaded, the SGSN still sends the activation request message to the overloaded GGSN, and achieves saving of network element resources.

FIG. 2 is a schematic flow chart of a method according to a second embodiment of the present invention, including:
Step 21: A gateway device determines an APN that needs to be controlled.
Step 22: The gateway device sends processing capability information of an activation request message corresponding to the APN that needs to be controlled to an access device, so that the access device performs flow control on a processing procedure of the activation request message according to the processing capability information of the activation request message, so that the number of activation request messages assigned to the gateway device does not exceed the number of activation request messages that the gateway device can process.

The processing capability information of the activation request message may be a size of an activation request message processing window, or the processing capability information of the activation request message may be a flow control ratio, where the flow control ratio refers to a ratio of the number of activation request messages that can be processed in a current statistical period to the number of activation request messages that have been processed in a previous statistical period.

In this embodiment, the gateway device sends information that needs to be controlled to the access device, so that the access device directly performs the flow control on the activation request message after learning a load capability of the gateway device, and the number of the activation request messages assigned to the gateway device does not exceed the number of the activation request messages that the gateway device can process, which may avoid that after a GGSN is overloaded, a SGSN still sends the activation request message to the overloaded GGSN, and achieve saving of network element resources.

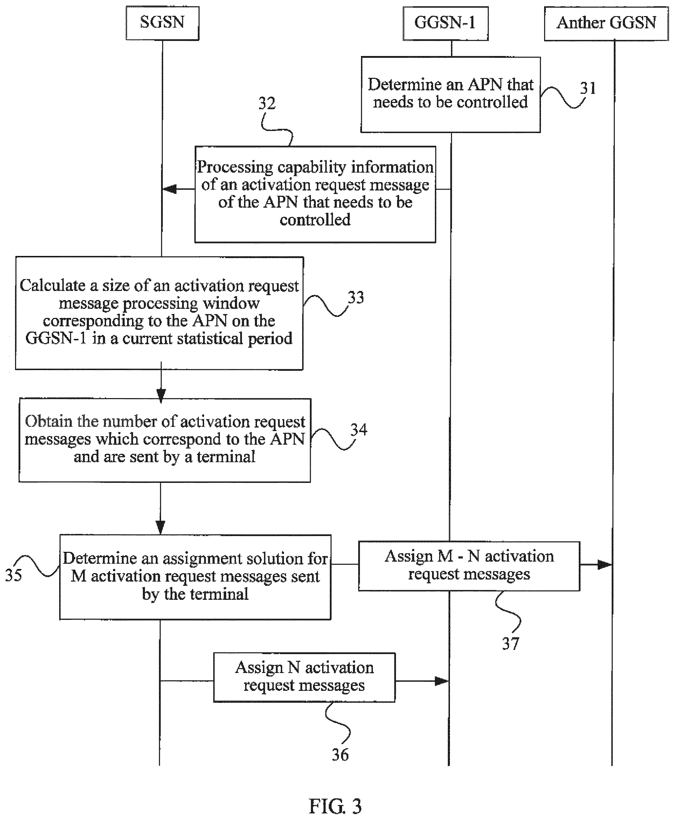

FIG. 3 is a schematic flow chart of a method according to a third embodiment of the present invention. In this embodiment, that an SGSN in a PS domain performs flow control according to relevant information sent by a GGSN is taken as an example, where GGSNs that feed back the relevant information are part of GGSNs that participates in assignment. Referring to FIG. 3, this embodiment includes:
Step 31: A certain GGSN, where a GGSN-1 is taken as an example in the following, determines an APN that needs to be controlled.

The GGSN may adopt the following manners for determination.
Manner 1: When a service success rate corresponding to an APN is smaller than or equal to a preset success rate threshold, the GGSN determines that the APN is an APN that needs to be controlled.
   For example, the GGSN gathers statistics on the service success rate of an access service on each APN. If the service success rate of a certain APN is continuously lower than a certain threshold, for example, is lower than 10%, it may be determined that the APN is an APN that needs to be controlled.
Manner 2: When the service request number corresponding to an APN is greater than or equal to a preset request number threshold, the GGSN determines that the APN is an APN that needs to be controlled.

For example, the GGSN gathers statistics on the service request number of each APN, and if the service request number of a certain APN is greater than the average service request number of other APNs by certain times, for example, greater by two times, it may be determined that the APN is an APN that needs to be controlled.

Step 32: The GGSN-1 sends processing capability information of an activation request message corresponding to the APN that needs to be controlled to an SGSN.

The processing capability information of the activation request message may be a size of a corresponding activation request message processing window within a current statistical period, and may also be a flow control ratio. For example, when the size of the activation request message processing window is N, it indicates that the number of activation request messages which corresponds to the APN and the GGSN may load is N, and when the number of the activation request messages sent to the GGSN is greater than N, the activation request message needs to be assigned to another GGSN or be discarded. The flow control ratio refers to a ratio of the number of activation request messages that can be processed in the current statistical period to the number of activation request messages that have been processed in a previous statistical period. For example, when the flow control ratio is 50%, the size of the activation request message processing window that has been processed in the previous statistical period is N, it may be obtained that the number of the activation request messages that can be processed in the current statistical period is N/2.

In a procedure of activating a service, after receiving an activation request message sent by a terminal, the SGSN determines a corresponding GGSN according to an APN carried in the activation request message, and then the SGSN sends a "Create PDP Context Request" to the corresponding GGSN, and the GGSN may send processing capability information of an activation request message to the SGSN through a message "Create PDP Context Respond" corresponding to the "Create PDP Context Request". For example, a field "Transit Window" is added in the message "Create PDP Context Respond", so as to carry the processing capability information of the activation request message.

Step 33: According to the processing capability information of the activation request message which corresponds to the APN that needs to be controlled and is sent by the GGSN-1, the SGSN calculates the size, for example, N, of the activation request message processing window corresponding to the APN on the GGSN-1 in the current statistical period, for example, 1 second.

The following procedure may be adopted for calculating the size of the activation request processing window according to the processing capability information of the activation request message: when the processing capability information of the activation request message sent by the GGSN-1 is the size of the activation request message processing window, the foregoing size of the activation request message processing window is directly obtained; and when the processing capability information of the activation request message sent by the GGSN-1 is the flow control ratio, the size of the activation request message processing window in the current statistical period may be calculated and obtained according to the flow control ratio and the size of the activation request message processing window that has been processed in the previous statistical period.

Step 34: The SGSN receives activation request messages sent by the terminal, and obtains the number, for example, M, of the activation request messages which correspond to the APN and are sent by the terminal in the current statistical period, for example, in 1 second.

The terminal sends the activation request message to the SGSN, and the activation request message carries an APN. Therefore, the SGSN may obtain the number of the activation request messages corresponding to each APN in the current statistical period in a statistical manner.

Step 35: Determine an assignment solution for the M activation request messages sent by the terminal.

That is, the SGSN judges whether the number of the activation request messages that have been assigned to the GGSN-1 in the current statistical period is smaller than or equal to N, and if yes, execute step 36; otherwise, execute step 37.

Step 36: According to an existing load sharing algorithm such as an average assignment algorithm or a weight assignment algorithm, the SGSN assigns the activation request messages to all the GGSNs that participate in load assignment including the GGSN-1. For example, N activation request messages are assigned to the GGSN-1 in the current assignment period. In this embodiment and the following embodiments, assigning, by an access device, the activation request message to a gateway device specifically includes that the access device sends a create request message (Create Request) or an update request message (update Request) to the gateway device according to the activation request message.

Step 37: In remaining time of the current assignment period, according to an existing load sharing algorithm such as an average assignment algorithm or a weight assignment algorithm, the SGSN assigns the activation request message to all the GGSNs that participate in the load assignment excluding the GGSN-1. For example, M - N of the received M activation request messages are assigned to other GGSNs.

In FIG. 3, steps 35 to 37 show the assignment of the M activation request messages sent by the terminal and the specific assignment request.

In this embodiment, the GGSN sends the processing capability information of the activation request message to the SGSN, so that the SGSN learns a load capability of the corresponding GGSN for the activation request message, and then directly performs flow control on the received activation request message according to the load capability of the GGSN, which avoids that the SGSN sends the activation request message to an overloaded GGSN, and may achieve saving of network element resources. In this embodiment, part of the GGSNs feed back relevant information to the SGSN, which may save an interaction process between the GGSN and the SGSN as well as the resources.

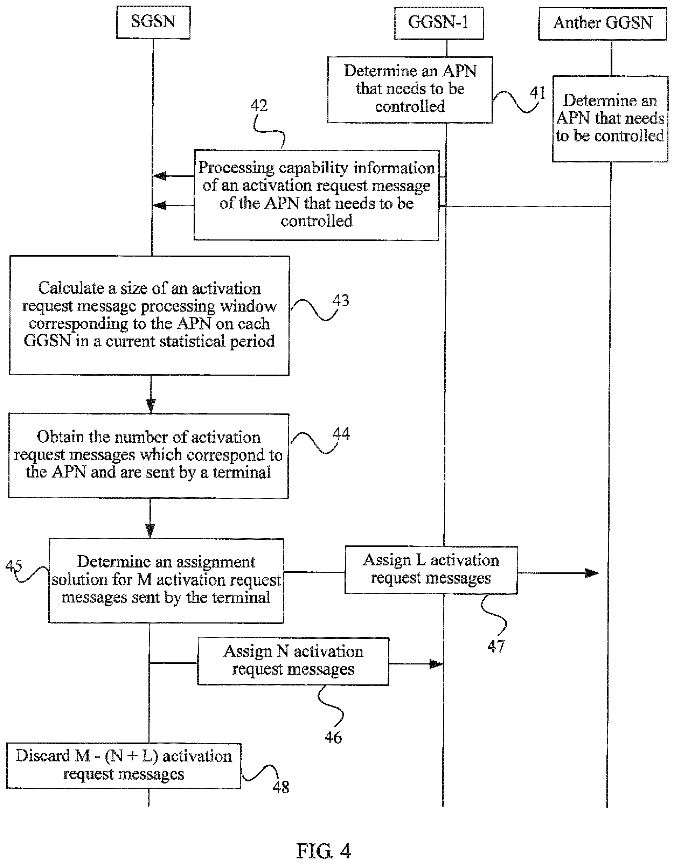

FIG. 4 is a schematic flow chart of a method according to a fourth embodiment of the present invention. In this embodiment, that an SGSN in a PS domain performs flow control according to relevant information sent by a GGSN is taken as an example, where the GGSN that feeds back the relevant information is all GGSNs that participate in assignment. Referring to FIG. 4, this embodiment includes:
Step 41: All GGSNs that participate in assignment determine an APN that needs to be controlled.

Reference may be made to step 31 for a determination manner adopted by each GGSN, which is not repeatedly described here.

Step 42: Each GGSN sends processing capability information of an activation request message corresponding to the APN that needs to be controlled to the SGSN.

Reference can be made to step 32 for content of the processing capability information of the activation request message and a message carrying the processing capability information of the activation request message, which are not repeatedly described here.

Step 43: According to the processing capability information of the activation request message which corresponds to the APN that needs to be controlled and is sent by each GGSN, the SGSN calculates a size of an activation request message processing window corresponding to the APN that needs to be controlled on each GGSN in a current statistical period, for example, in 1 second. Taking that there are two GGSNs as an example, sizes of activation request message processing windows are N and L, respectively.

The following procedure may be adopted for calculating the size of the activation request processing window according to the processing capability information of the activation request message: when the processing capability information of the activation request message sent by the GGSN is the size of the activation request message processing window, the foregoing size of the activation request message processing window is directly obtained; and when the processing capability information of the activation request message sent by the GGSN is a flow control ratio, the size of the activation request message processing window in the current statistical period may be calculated and obtained according to the flow control ratio and the size of the activation request message processing window that has been processed in a previous statistical period.

Step 44: The SGSN receives activation request messages sent by a terminal, and obtains the number, for example, M, of activation request messages of the APN that needs to be controlled in the current statistical period, for example, in 1 second.

The terminal sends the activation request message to the SGSN, and the activation request message carries an APN. Therefore, the SGSN may obtain the number of the activation request messages corresponding to each APN in the current statistical period in a statistical manner.

Step 45: Determine an assignment solution for the M activation request messages sent by the terminal.

That is, the SGSN judges in turn, whether the number of the activation request messages that have been assigned to each GGSN in a current assignment period is smaller than or equal to the size of its corresponding activation request message processing window, for example, whether smaller than or equal to N and L, respectively. If all the numbers of the activation request messages that have been assigned to all the GGSNs that participate in the assignment do not exceed the sizes of their corresponding activation request message processing windows, execute step 46; otherwise, if the number of the activation request messages that have been assigned to a certain GGSN is greater than the size of its corresponding activation request message processing window, for example, the number of the activation request messages that have been assigned to a GGSN-1 is greater than N, execute step 47.

Step 46: According to an existing load sharing algorithm such as an average assignment algorithm or a weight assignment algorithm, the SGSN assigns the activation request messages to all the GGSNs that participate in the load assignment. For example, N activation request messages are assigned to the GGSN-1 in the current assignment period.

Step 47: In the remaining time of the current assignment period, according to an existing load sharing algorithm such as an average assignment algorithm or a weight assignment algorithm, the SGSN assigns the activation request messages to all the GGSNs that participate in the load assignment excluding the GGSN-1. For example, L activation request messages are assigned to another GGSN in the current assignment period.

It may be learned from the foregoing assignment solution that, when M is smaller than or equal to (N + L), the M activation request messages received by the SGSN are all assigned to the GGSN; and when M is greater than (N + L), execute the following step.

Step 48: The SGSN discards M - (N + L) activation request messages.

In this embodiment, the GGSN sends the processing capability information of the activation request message to the SGSN, so that the SGSN learns a load capability of the corresponding GGSN, and then directly performs flow control on the received activation request message according to the load capability of the GGSN, which avoids that the SGSN sends the activation request message to an overloaded GGSN, and may save network element resources. In this embodiment, all the GGSNs feed back relevant information to the SGSN, and the SGSN directly discards excess activation request messages, which may avoid waste of the resources caused in flow control after interaction between the SGSN and the GGSN.

In FIG. 3 and FIG. 4, the interaction between the SGSN and the GGSN in the PS domain is described, and in an SAE, an SGW and a PGW may also execute the foregoing steps.

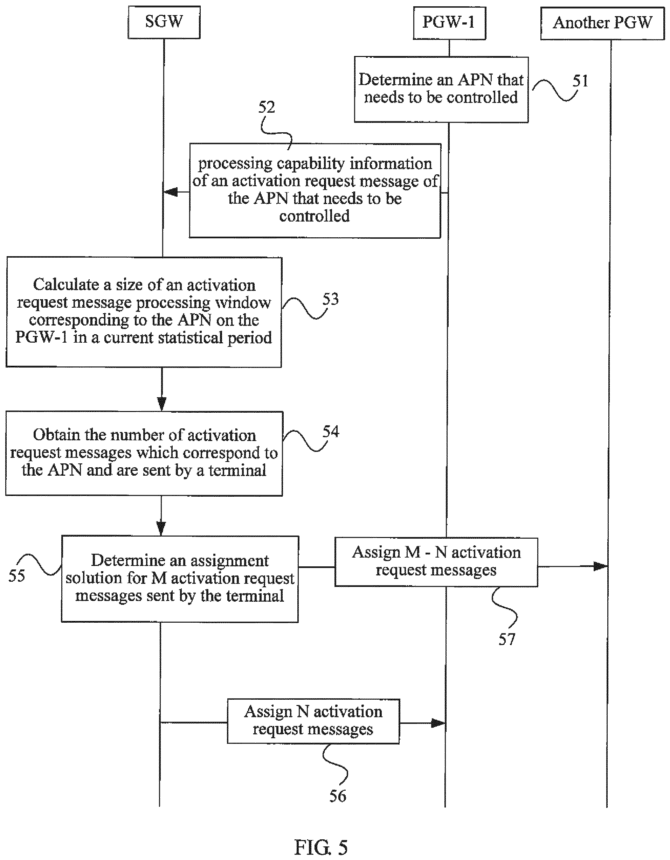

FIG. 5 is a schematic flow chart of a method according to a fifth embodiment of the present invention. In this embodiment, that an SGW in an SAE performs flow control according to relevant information sent by a PGW is taken as an example, where PGWs that feed back the relevant information are part of PGWs that participate in assignment. Referring to FIG. 5, this embodiment includes:
Step 51: A PGW-1 determines an APN that needs to be controlled.

Reference may be made to step 31 for a determination manner.

Step 52: The PGW-1 sends processing capability information of an activation request message corresponding to the APN that needs to be controlled to an SGW.

The PGW may add a field "Transit Window" in an existing message "Update Bearer Response", so as to carry the processing capability information of the activation request message. Reference may be made to step 32 for specific content of the processing capability information of the activation request message.

Step 53: According to the processing capability information of the activation request message which corresponds to the APN that needs to be controlled and is sent by the PGW-1, the SGW calculates a size, for example, N, of an activation request message processing window corresponding to the APN on the PGW-1 in a current statistical period, for example, in 1 second.

The following procedure may be adopted for calculating the size of the activation request processing window according to the processing capability information of the activation request message: when the processing capability information of the activation request message sent by the PGW-1 is the size of the activation request message processing window, the foregoing size of the activation request message processing window is directly obtained; and when the processing capability information of the activation request message sent by the PGW-1 is a flow control ratio, the size of the activation request message processing window in the current statistical period may be calculated and obtained according to the flow control ratio and the size of the activation request message processing window that has been processed in a previous statistical period.

Step 54: The SGW receives activation request messages sent by a terminal, and obtains the number, for example, M, of activation request messages of the APN that needs to be controlled in the current statistical period, for example, in 1 second.

The terminal sends the activation request message to the SGW, and the activation request message carries an APN. Therefore, the SGW may obtain the number of the activation request messages corresponding to each APN in the current statistical period in a statistical manner.

Step 55: Determine an assignment solution for the M activation request messages sent by the terminal.

That is, the SGW judges whether the number of the activation request messages that have been assigned to the PGW-1 in the current statistical period is smaller than or equal to N, and if yes, execute step 56; otherwise, execute step 57.

Step 56: According to an existing load sharing algorithm such as an average assignment algorithm or a weight assignment algorithm, the SGW assigns the activation request messages to all PGWs that participate in load assignment including the PGW-1. For example, N activation request messages are assigned to the PGW-1 in a current assignment period.

Step 57: In remaining time of the current assignment period, according to an existing load sharing algorithm such as an average assignment algorithm or a weight assignment algorithm, the SGW assigns the activation request messages to all PGWs that participate in load assignment excluding the PGW-1. For example, M - N of the received M activation request messages are assigned to another PGW.

In this embodiment, the PGW sends the processing capability information of the activation request message to the SGW, so that the SGW learns a load capability of the corresponding PGW, and then directly performs flow control on the received activation request message according to the load capability of the PGW, which avoids that the SGSN sends the activation request message to an overloaded GGSN, and may save network element resources. In this embodiment, part of the PGWs feed back relevant information to the SGW, which may save an interaction process between the GGSN and the SGW as well as the resources.

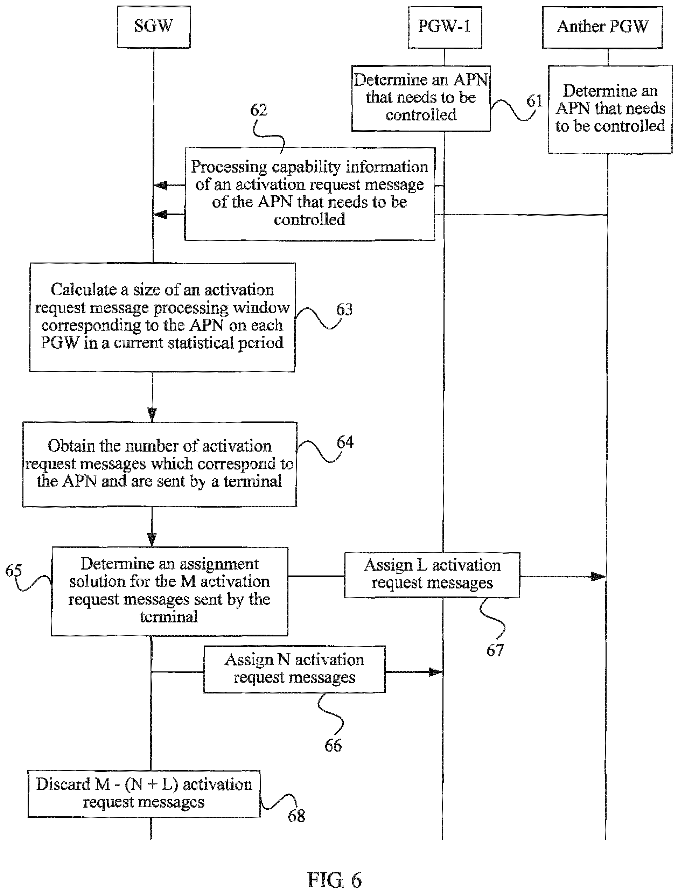

FIG. 6 is a schematic flow chart of a method according to a sixth embodiment of the present invention. In this embodiment, that an SGW in an SAE performs flow control according to relevant information sent by a PGW is taken as example, where PGWs that feed back the relevant information are all PGWs that participate in assignment. Referring to FIG. 6, this embodiment includes:
Step 61: All PGWs that participate in assignment determine APNs that needs to be controlled.

Reference may be made to step 31 for a determination manner adopted by each PGW, which is not repeatedly described here.

Step 62: Each PGW sends processing capability information of an activation request message corresponding to the APN that needs to be controlled to the SGW.

Reference may be made to step 32 for content of the processing capability information of the activation request message and a message carrying the processing capability information of the activation request message, which are not repeatedly described here.

Step 63: According to the processing capability information of the activation request message which corresponds to the APN that needs to be controlled and is sent by each PGW, the SGW calculates a size of an activation request message processing window corresponding to the APN on each PGW in a current statistical period, for example, in 1 second. Taking that there are two PGWs as an example, sizes of activation request message processing windows are N and L, respectively.

The following procedure may be adopted for calculating the size of the activation request processing window according to the processing capability information of the activation request message: when the processing capability information of the activation request message sent by the PGW is the size of the activation request message processing window, the foregoing size of the activation request message processing window is directly obtained; and when the processing capability information of the activation request message sent by the PGW is a flow control ratio, the size of the activation request message processing window in the current statistical period may be calculated and obtained according to the flow control ratio and the size of the activation request message processing window that has been processed in a previous statistical period.

Step 64: The SGW receives activation request messages sent by a terminal, and obtains the number, for example, M, of activation request messages of the APN that needs to be controlled in the current statistical period, for example, in 1 second.

The terminal sends the activation request message to the SGW, and the activation request message carries an APN. Therefore, the SGW may obtain the number of the activation request messages corresponding to each APN in the current statistical period in a statistical manner.

Step 65: Determine an assignment solution for the M activation request messages sent by the terminal.

That is, the SGW judges in turn, whether the number of the activation request messages that have been assigned to each PGW in the current statistical period is smaller than or equal to the size of its corresponding activation request message processing window, for example, whether smaller than or equal to N and L, respectively. If all the numbers of the activation request messages that have been assigned to all the PGWs that participate in the assignment do not exceed the sizes of their corresponding activation request message processing windows, execute step 66; otherwise, if the number of the activation request messages that have been assigned to a certain PGW is greater than the size of its corresponding activation request message processing window, for example, the number of the activation request messages that have been assigned to a PGW-1 is greater than N, execute step 67.

Step 66: According to an existing load sharing algorithm such as an average assignment algorithm or a weight assignment algorithm, the SGW assigns the activation request messages to all the PGWs that participate in the load assignment.

Step 67: In remaining time of the current assignment period, according to an existing load sharing algorithm such as an average assignment algorithm or a weight assignment algorithm, the SGW assigns the activation request messages to all the PGWs that participate in the load assignment excluding the PGW-1.

It may be learned from the foregoing assignment solution that, when M is smaller than or equal to (N + L), the M activation request messages received by the SGW are all assigned to the PGW; and when M is greater than (N + L), perform the following step.

Step 68: The SGW discards M - (N + L) activation request messages.

In this embodiment, the PGW sends the processing capability information of the activation request message to the SGW, so that the SGW learns a load capability of the corresponding PGW, and then directly performs flow control on the received activation request message according to the load capability of the PGW, which avoids that the SGW sends the activation request message to an overloaded PGW, and may save network element resources. In this embodiment, all the PGWs feed back relevant information to the SGW, and the SGW directly discards excess activation request messages, which may avoids waste of the resources caused in flow control after interaction between the SGW and the PGW.

In FIG. 3 to FIG. 6, that the SGSN/SGW passively obtains control information from the GGSN/PGW is taken as an example, and in practical implementation, the SGSN/SGW may actively learn the control information.

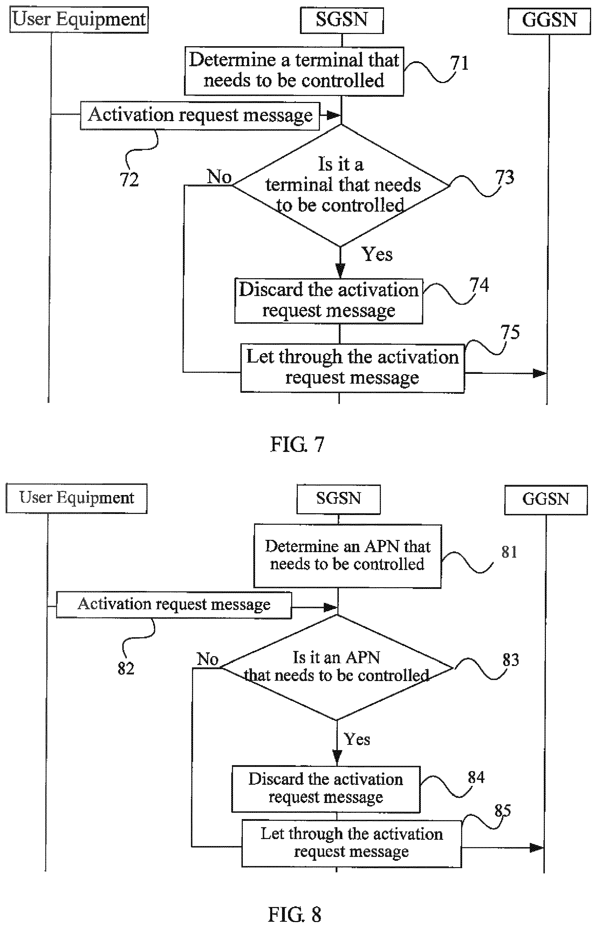

FIG. 7 is a schematic flow chart of a method according to a seventh embodiment of the present invention, and in this embodiment, that an SGSN actively learns a terminal that needs to be controlled is taken as an example. Referring to FIG. 7, this embodiment includes:
Step 71: An SGSN determines a terminal that needs to be controlled.

The SGSN may adopt the following manner for determination.

After receiving an activation request message (Activate PDP Context Request) of the terminal, the SGSN sends a create PDP context request (Create PDP Context Request) to a GGSN. When creation fails, the GGSN returns a create PDP context response (Create PDP Context Response) carrying a failure cause value to the SGSN.

And then, the SGSN may record the number of creation failures corresponding to each terminal, and when the number of the failures reaches a preset threshold, for example, three failures in 5 minutes, it is determined that the terminal is a terminal that needs to be controlled.

Step 72: The SGSN receives an activation request message sent by a terminal.

Step 73: The SGSN judges whether the terminal corresponding to the received activation request message is the terminal that needs to be controlled, and if yes, execute step 74; otherwise, execute step 75.

When sending the activation request message to the SGSN, the terminal carries terminal information, and the SGSN has determined the terminal that needs to be controlled in step 71, therefore, the SGSN may perform the foregoing judgment in a comparison manner.

Step 74: The SGSN discards the activation request message, and may further return a failure response to the terminal.

After a period of control, the control to the terminal may be removed, that is, the following step may be further included.

Step 75: The SGSN lets through the activation request message, that is, when the terminal is not a terminal that needs to be controlled, or is a terminal that needs to be controlled but the SGSN learns that the terminal meets a preset let-through condition, the SGSN continues to assign the activation request message, where continuing to assign the activation request message refers to sending a create request message or an update request message to the GGSN according to the activation request message sent by the terminal.

The let-through condition may be set by adopting the following manners.
Manner 1: Set a first time threshold, where the first time threshold is time corresponding to trying to assign the activation request message.
   For example, after entering a control state for a period of time, for example, after 5 minutes, the activation request message sent by the terminal is sent to the corresponding GGSN. If the GGSN normally responds, the control state of the terminal is removed; otherwise, the control state of the terminal is continuously kept.
Manner 2: Set a second time threshold, where the second time threshold is time corresponding to directly letting through the activation request message.

For example, a time such as 30 minutes is set, and then the control state is removed when the time is exceeded.

In this embodiment of the present invention, letting through the activation request message refers to that an access device continues to assign the activation request message, but does not directly discard the activation request message in the control state, and continuing to assign the activation request message refers to sending a create request message or an update request message to the GGSN according to the activation request message sent by the terminal.

In this embodiment, that the SGSN and the GGSN are used as interactive network elements is taken as an example. It may be understood that, the method in this embodiment may similarly be applied in other systems. For example, the method and steps in this embodiment are applicable to interaction between an SGW and a PGW in an SAE.

In this embodiment, the SGSN actively learns control information, so that after receiving the activation request message, the SGSN directly performs flow control according to the control information determined by the SGSN itself, which avoids that the SGSN assigns the activation request message to an overloaded GGSN, and may save network element resources.

FIG. 8 is a schematic flow chart of a method according to an eighth embodiment of the present invention, and in this embodiment, that an SGSN actively learns an APN that needs to be controlled is taken as an example. Referring to FIG. 8, this embodiment includes:
Step 81: An SGSN determines an APN that needs to be controlled.

The SGSN may adopt the following manner for determination: after receiving an activation request message (Activate PDP Context Request), which carries an APN, of a terminal, the SGSN sends a create PDP context request (Create PDP Context Request) to a GGSN. When creation fails, the GGSN returns a create PDP context response (Create PDP Context Response) carrying a failure cause value to the SGSN.

And then, the SGSN may record the number of creation failures corresponding to each APN, and when the number of failures reaches a preset threshold, for example, three failures in 5 minutes, it is determined that the APN is an APN that needs to be controlled.

Step 82: The SGSN receives an activation request message that carries an APN and is sent by a terminal.

Step 83: The SGSN judges whether the APN in the received activation request message is the APN that needs to be controlled, and if yes, execute step 84; otherwise, execute step 85. When sending an activation request message to the SGSN, the terminal carries an APN, and the SGSN has determined the APN that needs to be controlled in step 81, therefore, the SGSN may perform the foregoing judgment in a comparison manner.

Step 84: The SGSN discards the activation request message, and may further return a failure response to the terminal.

It may be learned from the foregoing that, in this embodiment, after a certain APN is judged as an APN that needs to be controlled, the activation request message carrying the APN may be directly discarded, and is not assigned to the GGSN. However, in the prior art, due to a lack of a flow control solution, after the activation request message carrying the APN that needs to be controlled is received, it is still assigned to the GGSN. Because the GGSN is already overloaded at this time, assigning the activation request message to the overloaded GGSN causes waste of network element resources.

After a period of control, the control on the APN may be removed, that is, the following steps may be further included.

Step 85: The SGSN lets through the activation request message, that is, when the APN is not an APN that needs to be controlled, or is an APN that needs to be controlled but the SGSN learns that the APN meets a preset let-through condition, the activation request message carrying the APN that needs to be controlled is let through.

The let-through condition may be set by adopting the following manners.
Manner 1: After entering a control state for a period of time, for example, after 5 minutes, the activation request message carrying the APN is sent to the corresponding GGSN. If the GGSN normally responds, the control state of the APN is removed; otherwise, the control state of the APN is continuously kept.
Manner 2: Set a time, for example, 30 minutes, and then the control state is removed after the time is exceeded.

In this embodiment, that the SGSN and the GGSN are used as interactive network elements is taken as an example. It may be understood that, the method in this embodiment may similarly be applied in other systems. For example, the method and steps in this embodiment are applicable to interaction between an SGW and a PGW in an SAE.

In this embodiment, the SGSN actively learns control information, so that after receiving the activation request message, the SGSN performs flow control according to the control information set by the SGSN itself, which avoids that the SGSN assigns the activation request message to the overloaded GGSN, and may save the network element resources.

In FIG. 7 and FIG. 8, the terminal and the APN are used as a control object, respectively. It may be understood that, the two may be control objects at the same time. For example, first, it is judged whether a terminal corresponding to a certain activation request message is a terminal that needs to be controlled, and when the terminal is not a terminal that needs to be controlled, it is further judged whether an APN carried in the activation request message is an APN that needs to be controlled. When neither the terminal is a terminal that needs to be controlled nor the APN is an APN that needs to be controlled, the activation request message is let through; otherwise, when the terminal is a terminal that needs to be controlled or the APN is an APN that needs to be controlled, the activation request message is discarded. Definitely, after a period of control, the foregoing let-through condition may similarly be adopted to let through a corresponding activation request message.

In FIG. 3 to FIG. 6, the SGSN/SGW passively learns an object that needs to be controlled, while in FIG. 7 to FIG. 8, the SGSN/SGW actively learns the object that needs to be controlled. It may be understood that, the passive learning manner and the active learning manner may be adopted in combination. For example, the SGSN first judges, according to the terminal that needs to be controlled obtained by the SGSN itself, whether the terminal corresponding to the activation request message is a terminal that needs to be controlled, and when the terminal is not a terminal that needs to be controlled, assigns the activation request message to the GGSN according to the size of the activation request message processing window that may be loaded on the GGSN and is learned passively.

In conclusion, taking the PS domain as an example, according to the embodiments of the present invention, when a certain network element is faulty or is overloaded, and the GGSN may sense the faulty or overloaded network element, the GGSN may inform the SGSN, and the SGSN may directly, through flow control, assign the activation request message to another GGSN or directly discards the activation request message for the first time, without trying to assign the activation request message to the faulty point each time and assigning the activation request message to another GGSN until failure. Because an industry user and an ordinary user adopt different APNs, in the embodiments, the GGSN sends the APN that the GGSN cannot process to the SGSN, so that the SGSN performs flow control to different extents through the APN.

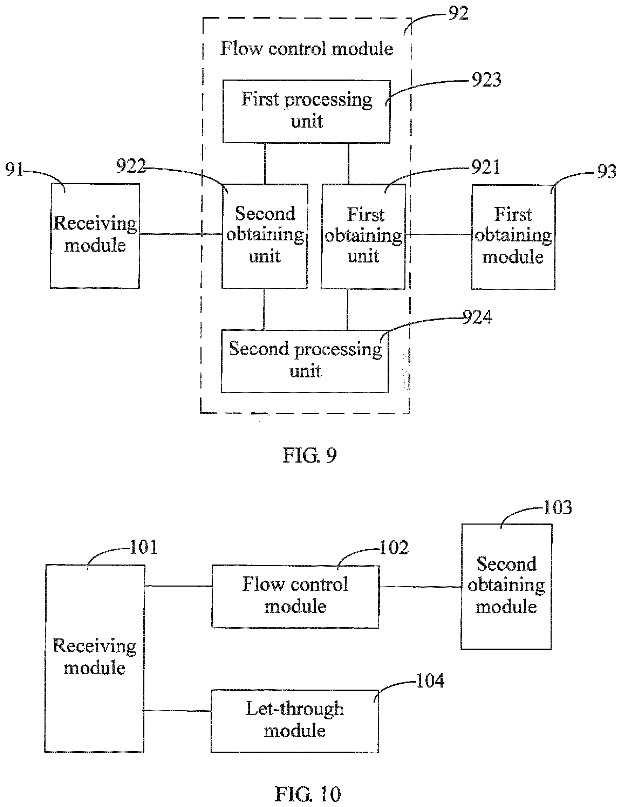

FIG. 9 is a schematic structural diagram of an access device according to a ninth embodiment of the present invention. The device of this embodiment may be an SGSN, an MME, or an SGW, and this embodiment includes a receiving module 91 and a flow control module 92. The receiving module 91 is configured to receive an activation request message sent by a terminal, and the flow control module 92 is configured to perform flow control on a processing procedure of the activation request message according to pre-obtained control information, so that the number of activation request messages assigned to a gateway device does not exceed the number of activation request messages that the gateway device can process. The control information is processing capability information of an activation request message sent by the gateway device, or the control information is information of a terminal and/or an APN that needs to be controlled and is predetermined by the access device.

The control information is relevant information of an activation request message processing window of the gateway device, and at this time, the device may further include a first obtaining module 93, where the first obtaining module 93 is configured to receive the processing capability information of the activation request message which corresponds to the gateway device and is sent by the gateway device, where the processing capability information of the activation request message is a size of the activation request message processing window, or the processing capability information of the activation request message is a ratio of the number of activation request messages that can be processed in a current statistical period to the number of activation request messages that have been processed in a previous statistical period. When the access device is an SGSN, the gateway device is a GGSN, and when the access device is an SGW or an MME, the gateway device is a PGW.

Accordingly, the flow control module 92 may include a first obtaining unit 921, a second obtaining unit 922, and a first processing unit 923. The first obtaining unit 921 is configured to obtain, according to the processing capability information of the activation request message, the size of the activation request message processing window that can be processed in the current statistical period by the gateway device that sends the processing capability information of the activation request message. The second obtaining unit 922 is configured to obtain the number of the activation request messages that have been assigned to the gateway device that sends the processing capability information of the activation request message. The first processing unit 923 is configured to stop assigning, when the number of the activation request messages that have been assigned is greater than the number of the activation request messages that can be processed in the current statistical period, the activation request message to the gateway device that sends the processing capability information of the activation request message. In addition, the flow control module 92 may further include a second processing unit 924, where the second processing unit 924 is configured to discard, when the number of the received activation request messages is greater than a sum of sizes of activation request message processing windows corresponding to all the gateway devices that send the processing capability information of the activation request message, activation request messages that exceed the sum of the sizes of the activation request message processing windows.

In this embodiment, the access device directly performs flow control on the activation request message according to the relevant information sent by the gateway device, which avoids that the SGSN sends the activation request message to an overloaded GGSN, and can achieve saving of network element resources.

FIG. 10 is a schematic structural diagram of an access device according to a tenth embodiment of the present invention. The device of this embodiment may be an SGSN, an MME, or an SGW, and this embodiment includes a receiving module 101 and a flow control module 102. The receiving module 101 is configured to receive an activation request message sent by a terminal. The flow control module 102 is configured to perform flow control on a processing procedure of the activation request message according to pre-obtained control information, so that the number of activation request messages assigned to a gateway device does not exceed the number of activation request messages that the gateway device can process. The control information is relevant information of an activation request message processing window of the gateway device, or the control information is information of a terminal and/or an APN that needs to be controlled.

The control information is the terminal and/or the access point name APN that needs to be controlled, and at this time, the device may further include a second obtaining module 103, where the second obtaining module 103 is configured to determine a terminal and/or an APN that needs to be controlled. For example, the second obtaining module 103 is specifically configured to determine, when the number of assignment failures of an activation request message corresponding to a terminal and/ or an APN is greater than a preset threshold, that the terminal and/or APN is a terminal/or APN that needs to be controlled. At this time, the flow control module 102 is specifically configured to discard the activation request message corresponding to the terminal and/or APN that needs to be controlled. In addition, the device may further include a let-through module 104, where the let-through module 104 is configured to let through, according to a preset let-through condition, the activation request message corresponding to the terminal and/or APN that needs to be controlled. Specifically, the let-through module 104 is configured to assign, after a preset time threshold is reached, the activation request message corresponding to the terminal and/or APN that needs to be controlled to the gateway device, and when the gateway device correctly responds, continue to assign the activation request message corresponding to the terminal and/or APN that needs to be controlled. Or, the let-through module 104 is configured to assign, after a preset time threshold is reached, the activation request message corresponding to the terminal and/or APN that needs to be controlled.

In this embodiment, flow control is directly performed on the activation request message according to the pre-obtained control information, which avoids that the SGSN sends the activation request message to an overloaded GGSN, and can achieve saving of network element resources of the access device and the gateway device.

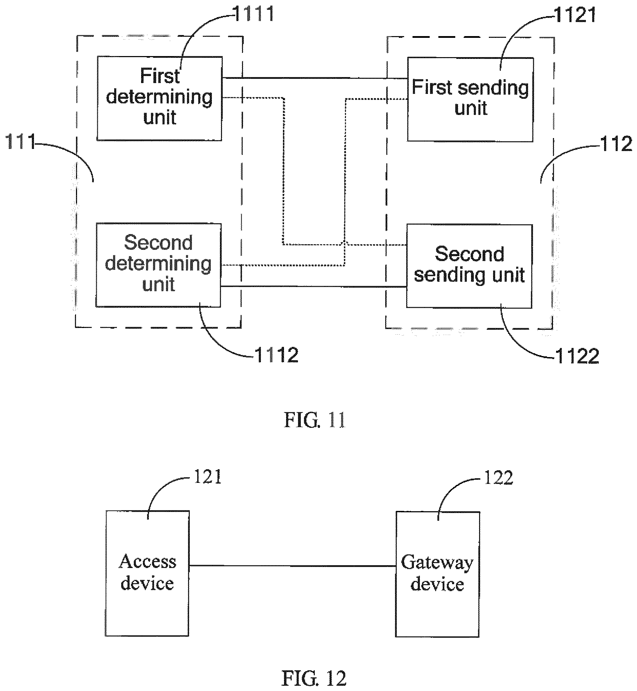

FIG. 11 is a schematic structural diagram of a gateway device according to an eleventh embodiment of the present invention. The device of this embodiment is a GGSN or a PGW, and this embodiment includes a determining module 111 and a sending module 112. The determining module 111 is configured to determine an APN that needs to be controlled. The sending module 112 is configured to send processing capability information of an activation request message corresponding to the APN to an access device, where the processing capability information of the activation request message is a size of an activation request message processing window, or the processing capability information of the activation request message is a ratio of the number of activation request messages that can be processed in a current statistical period to the number of activation request messages that have been processed in a previous statistical period, so that the access device performs flow control on a processing procedure of the activation request message according to the processing capability information of the activation request message, so that the number of activation request messages assigned to the gateway device does not exceed the number of activation request messages that the gateway device can process.

The determining module 111 may include a first determining unit 1111 or a second determining unit 1112. The first determining unit 1111 is configured to obtain, when a service success rate of an APN is lower than a preset success rate threshold, that the APN is an APN that needs to be controlled. The second determining unit 1112 is configured to obtain, when the service request number of an APN is higher than a preset request number threshold, that the APN is an APN that needs to be controlled.

In addition, when the access device is an SGSN, the gateway device of this embodiment is specifically a GGSN, and at this time, the sending module 112 may include a first sending unit 1121. The first sending unit 1121 is configured to carry the processing capability information of the activation request message in a PDP context response message, and send it to the SGSN, where the processing capability information of the activation request message is a size of an activation request message processing window, or the processing capability information of the activation request message is a ratio of the number of activation request messages that can be processed in a current statistical period to the number of activation request messages that have been processed in a previous statistical period, so that the SGSN performs flow control on a processing procedure of the activation request message according to the processing capability information of the activation request message, and the number of activation request messages assigned to the GGSN does not exceed the number of activation request messages that the GGSN can process. Or, when the access device is an SGW, the gateway device of this embodiment is specifically a PGW, and at this time, the sending module 112 may include a second sending unit 1122, where the second sending unit 1122 is configured to carry the processing capability information of the activation request message in an update bearer response, and send it to the SGW, where the processing capability information of the activation request message is a size of an activation request message processing window, or the processing capability information of the activation request message is a ratio of the number of activation request messages that can be processed in a current statistical period to the number of activation request messages that have been processed in a previous statistical period, so that the PGW performs flow control on a processing procedure of the activation request message according to the processing capability information of the activation request message, and the number of the activation request messages that are assigned on the PGW does not exceed the number of activation request messages that the PGW can process.

In this embodiment, the gateway device sends information that needs to be controlled to the access device, so that the access device directly performs flow control on the activation request message according to the control information, which avoids that the SGSN sends the activation request message to an overloaded GGSN, and can achieve saving of network element resources.

FIG. 12 is a schematic structural diagram of a system according to a twelfth embodiment of the present invention, including an access device 121 and a gateway device 122. The access device 121 may specifically be the device shown in FIG. 9 or FIG. 10, and the gateway device 122 may specifically be the device shown in FIG. 11. For example, the access device 121 is an SGSN and the gateway device 122 is a GGSN, or, the access device 121 is an SGW or MME and the gateway device 122 is a PGW.

In this embodiment, the access device directly performs flow control on a processing procedure of an activation request message according to control information, which avoids that the SGSN sends the activation request message to an overloaded GGSN, and can achieve saving of network element resources of the access device and the gateway device.

In conclusion, in the prior art, if an activation request message is assigned to an overloaded gateway device, the gateway device returns a failure response to an access device, and the access device may assign the current activation request message to another gateway device according to the failure response, which achieves load sharing. However, when the access receives another activation request message next time, due to a lack of a flow control solution, the access device still assigns the activation request message to the overloaded gateway device. In the embodiments of the present invention, an access device may pre-obtain control information, and then after receiving an activation request message, may first perform flow control according to the control information, which avoids assigning the activation request message to the overloaded gateway device. That is to say, in the prior art, every time after receiving an activation request message, the access device assigns the activation request message to the gateway device regardless whether the gateway device is overloaded or not, so that the number of activation request messages assigned to the gateway device is equal to the number of activation request messages received by the access device. However, in the embodiments of the present invention, after receiving the activation request message, the access device first performs flow control, and does not assign the activation request message to the overloaded gateway device, so that when the gateway device is overloaded, the number of the activation request messages assigned to the gateway device is smaller than the number of the activation request messages received by the access device. In the embodiments of the present invention, after obtaining the control information, the activation request message is not assigned to the overloaded gateway device; therefore, the network element cost may be reduced.

Persons of ordinary skill in the art may understand that all of or part of the steps of the foregoing method embodiments may be implemented by a program instructing relevant hardware. The program may be stored in a computer readable storage medium. When the program is executed, the steps of the foregoing method embodiments are executed. The storage medium may be various media that may store program codes, such as a ROM, a RAM, a magnetic disk or a compact disk.

Finally, it should be noted that the foregoing embodiments are merely used for describing the technical solutions of the present invention, but are not intended to limit the present invention. Persons of ordinary skill in the art should understand that, modifications may be made to the technical solutions recorded in the embodiments, or equivalent replacements maybe made to part of the technical features in the technical solutions, as long as such modifications or replacements do not cause the nature of corresponding technical solutions to depart from the spirit and scope of the technical solutions of the embodiments of the present invention.

## Claims

1. A flow control method, comprising:
receiving (32, 42, 52, 62), by an access device from a gateway device, processing capability information of an activation request message, wherein the processing capability information of the activation request message corresponds to an access point name, APN, needing to be controlled that is determined by the gateway device, and the processing capability information of the activation request message is a size of an activation request message processing window, and the size of the activation request message processing window indicates a number of activation request messages which corresponds to the APN and the gateway device can load in a current statistical period;
receiving (11), by the access device, the activation request message sent by a terminal; and
performing (12), by the access device, flow control on a processing procedure of the activation request message according to the processing capability information of the activation request message,
which comprises:
obtaining (33, 43, 53, 63), according to the processing capability information of the activation request message, the size of the activation request message processing window that corresponds to the APN and can be processed by the gateway device in the current statistical period;
obtaining (34, 44, 54, 64) the number of activation request messages that corresponds to the APN and have been assigned to the gateway device in the current statistical period;
stopping assigning, when the number of the activation request messages that have been assigned in the current statistical period is greater than the size of the activation request message processing window that can be processed in the current statistical period, the activation request message to the gateway device, in the remaining time of the current statistical period; and
assigning (37, 57) the activation request message to another gateway device, or, discarding (48, 68) the activation request message.

2. A flow control device of an access device, comprising:
means for receiving processing capability information of an activation request message sent by a gateway device, wherein the processing capability information of the activation request message corresponds to an access point name, APN, needing to be controlled that is determined by the gateway device, and the processing capability information of the activation request message is a size of an activation request message processing window, and the size of the activation request message processing window indicates a number of activation request messages which corresponds to the APN and the gateway device can load in a current statistical period;
means for receiving the activation request message sent by a terminal; and
means for performing flow control on a processing procedure of the activation request message according to the processing capability information of the activation request message,
which comprises:
means for obtaining, according to the processing capability information of the activation request message, the size of the activation request message processing window that corresponds to the APN and can be processed by the gateway device in the current statistical period;
means for obtaining the number of the activation request messages that corresponds to the APN and have been assigned to the gateway device in the current statistical period;
means for stopping assigning, when the number of the activation request messages that have been assigned in the current statistical period is greater than the size of the activation request message processing window that can be processed in the current statistical period, the activation request message to the gateway device, in the remaining time of the current statistical period; and
means for assigning the activation request message to another gateway device, or,
means for discarding the activation request message.

3. A flow control method, comprising:
receiving (32, 42, 52, 62), by an access device sent by a gateway device processing capability information of an
activation request message, wherein the processing capability information of the activation request message corresponds to an access point name, APN, needing to be controlled that is determined by the gateway device, and the processing capability information of the activation request message is a flow control ratio, where the flow control ratio refers to a ratio of a number of activation request messages that can be processed in a current statistical period to a number of activation request messages that have been processed in a previous statistical period;
receiving (11), by the access device, the activation request message sent by a terminal; and
performing (12), by the access device, flow control on a processing procedure of the activation request message according to the processing capability information of the activation request message, which comprises:
calculating (33, 43, 53, 63), according to the processing capability information of the activation request message, a size of an activation request message processing window that corresponds to the APN and can be processed by the gateway device in a current statistical period, and the size of the activation request message processing window indicates the number of activation request messages which corresponds to the APN and can be processed by the gateway device in the current statistical period;
obtaining (34, 44, 54, 64) a number of activation request messages that corresponds to the APN and have been assigned to the gateway device in the current statistical period;
stopping assigning, when the number of the activation request messages that have been assigned in the current statistical period is greater than the size of the activation request message processing window that can be processed in the current statistical period, the activation request message to the gateway device, in the remaining time of the current statistical period; and
assigning (37, 57) the activation request message to another gateway device, or, discarding (48, 68) the activation request message.

4. A flow control device of an access device, comprising:
means for receiving processing capability information of an activation request message sent by a gateway device, wherein the processing capability information of the activation request message corresponds to an access point name, APN, needing to be controlled that is determined by the gateway device, and the processing capability information of the activation request message is a flow control ratio, where the flow control ratio refers to a ratio of a number of activation request messages that can be processed in a current statistical period to a number of activation request messages that have been processed in a previous statistical period;
means for receiving the activation request message sent by a terminal; and
means for performing flow control on a processing procedure of the activation request message according to the processing capability information of the activation request message, which comprises:
means for calculating, according to the processing capability information of the activation request message, a size of an activation request message processing window that corresponds to the APN and can be processed by the gateway device in a current statistical period, and the size of the activation request message processing window indicates a number of activation request messages which corresponds to the APN and can be processed by the gateway device in the current statistical period;
means for obtaining the number of activation request messages that corresponds to the APN and have been assigned to the gateway device in the current statistical period;
means for stopping assigning, when the number of the activation request messages that have been assigned in the current statistical period is greater than the size of the activation request message processing window that can be processed in the current statistical period, the activation request message to the gateway device, in the remaining time of the current statistical period; and
means for assigning the activation request message to another gateway device, or,
means for discarding the activation request message.

## Patentansprüche

1. Flusssteuerungsverfahren, umfassend:
Empfangen (32, 42, 52, 62), durch eine Zugriffsvorrichtung von einer Gateway-Vorrichtung, der Verarbeitungsfähigkeitsinformation einer Aktivierungsanforderungsnachricht, wobei die Verarbeitungsfähigkeitsinformation der Aktivierungsanforderungsnachricht einem der Steuerung unterliegenden Zugangspunktnamen (Access Point Name, APN) entspricht, der von der Gateway-Vorrichtung bestimmt wird, und die Verarbeitungsfähigkeitsinformation der Aktivierungsanforderungsnachricht der Größe eines Aktivierungsanforderungsnachrichten-Verarbeitungsfensters entspricht, und die Größe des Aktivierungsanforderungsnachrichten-Verarbeitungsfensters eine Anzahl von Aktivierungsanforderungsnachrichten angibt, die dem APN entsprechen und welche die Gateway-Vorrichtung in einer aktuellen statistischen Periode laden kann; Empfangen (11), durch die Zugriffsvorrichtung, der Aktivierungsanforderungsnachricht, die von einem Endgerät gesendet wird;
und
Durchführen (12), durch die Zugriffsvorrichtung, der Flusssteuerung für eine Verarbeitungsprozedur der Aktivierungsanforderungsnachricht gemäß der Verarbeitungsfähigkeitsinformation der Aktivierungsanforderungsnachricht,
welches umfasst:
Erhalten (33, 43, 53, 63), gemäß der Verarbeitungsfähigkeitsinformation der Aktivierungsanforderungsnachricht, der Größe des Aktivierungsanforderungsnachrichten-Verarbeitungsfensters, das dem APN entspricht und durch die Gateway-Vorrichtung in der aktuellen statistischen Periode verarbeitet werden kann;
Erhalten (34, 44, 54, 64) der Anzahl der Aktivierungsanforderungsnachrichten, die dem APN entsprechen und der Gateway-Vorrichtung in der aktuellen statistischen Periode zugewiesen worden sind;
Beenden des Zuweisens, wenn die Anzahl von Aktivierungsanforderungsnachrichten, die in der aktuellen statistischen Periode zugewiesen worden sind, größer ist als die Größe des Aktivierungsanforderungsnachrichten-Verarbeitungsfensters, das in der aktuellen statistischen Periode verarbeitet werden kann, der Aktivierungsanforderungsnachricht an die Gateway-Vorrichtung in der verbleibenden Zeit der aktuellen statistischen Periode; und
Zuweisen (37, 57) der Aktivierungsanforderungsnachricht an eine andere Gateway-Vorrichtung oder Verwerfen (48, 68) der Aktivierungsanforderungsnachricht.

2. Flusssteuerungsvorrichtung einer Zugriffsvorrichtung, umfassend:
Mittel zum Empfangen der Verarbeitungsfähigkeitsinformation einer Aktivierungsanforderungsnachricht, die von einer Gateway-Vorrichtung gesendet wird, wobei die Verarbeitungsfähigkeitsinformation der Aktivierungsanforderungsnachricht einem der Steuerung unterliegenden Zugangspunktnamen (Access Point Name, APN) entspricht, der von der Gateway-Vorrichtung bestimmt wird, und die Verarbeitungsfähigkeitsinformation der Aktivierungsanforderungsnachricht der Größe eines Aktivierungsanforderungsnachrichten-Verarbeitungsfensters entspricht, und die Größe des Aktivierungsanforderungsnachrichten-Verarbeitungsfensters eine Anzahl von Aktivierungsanforderungsnachrichten angibt, die dem APN entsprechen und welche die Gateway-Vorrichtung in einer aktuellen statistischen Periode laden kann;
Mittel zum Empfangen der Aktivierungsanforderungsnachricht, die von einem Endgerät gesendet wird; und
Mittel zum Durchführen der Flusssteuerung für eine Verarbeitungsprozedur der Aktivierungsanforderungsnachricht gemäß der Verarbeitungsfähigkeitsinformation der Aktivierungsanforderungsnachricht,
welches umfasst:
Mittel zum Erhalten, gemäß der Verarbeitungsfähigkeitsinformation der Aktivierungsanforderungsnachricht, der Größe des Aktivierungsanforderungsnachrichten-Verarbeitungsfensters, das dem APN entspricht und durch die Gateway-Vorrichtung in der aktuellen statistischen Periode verarbeitet werden kann;
Mittel zum Erhalten der Anzahl der Aktivierungsanforderungsnachrichten, die dem APN entsprechen und der Gateway-Vorrichtung in der aktuellen statistischen Periode zugewiesen worden sind;
Mittel zum Beenden des Zuweisens, wenn die Anzahl von Aktivierungsanforderungsnachrichten, die in der aktuellen statistischen Periode zugewiesen worden sind, größer ist als die Größe des Aktivierungsanforderungsnachrichten-Verarbeitungsfensters, das in der aktuellen statistischen Periode verarbeitet werden kann, der Aktivierungsanforderungsnachricht an die Gateway-Vorrichtung in der verbleibenden Zeit der aktuellen statistischen Periode; und
Mittel zum Zuweisen der Aktivierungsanforderungsnachricht an eine andere Gateway-Vorrichtung oder Mittel zum Verwerfen der Aktivierung s anforderung s nachricht.

3. Flusssteuerungsverfahren, umfassend:
Empfangen (32, 42, 52, 62), durch eine Zugriffsvorrichtung, der Verarbeitungsfähigkeitsinformation einer Aktivierungsanforderungsnachricht, die von einer Gateway-Vorrichtung gesendet wird, wobei die Verarbeitungsfähigkeitsinformation der Aktivierungsanforderungsnachricht einem der Steuerung unterliegenden Zugangspunktnamen (Access Point Name, APN) entspricht, der von der Gateway-Vorrichtung bestimmt wird, und die Verarbeitungsfähigkeitsinformation der Aktivierungsanforderungsnachricht ein Durchflusssteuerungsverhältnis ist, wobei das Durchflusssteuerungsverhältnis sich auf ein Verhältnis einer Anzahl von Aktivierungsanforderungsnachrichten, die in einer aktuellen statistischen Periode verarbeitet werden können, zu einer Anzahl von Aktivierungsanforderungsnachrichten bezieht, die in einer vorherigen statistischen Periode verarbeitet wurden;
Empfangen (11), durch die Zugriffsvorrichtung, der Aktivierungsanforderungsnachricht, die von einem Endgerät gesendet wird; und
Durchführen (12), durch die Zugriffsvorrichtung, der Flusssteuerung für eine Verarbeitungsprozedur der Aktivierungsanforderungsnachricht gemäß der Verarbeitungsfähigkeitsinformation der Aktivierungsanforderungsnachricht, welches umfasst:
Berechnen (33, 43, 53, 63), gemäß der Verarbeitungsfähigkeitsinformation der Aktivierungsanforderungsnachricht, einer Größe eines Aktivierungsanforderungsnachrichten-Verarbeitungsfensters, das dem APN entspricht und durch die Gateway-Vorrichtung in einer aktuellen statistischen Periode verarbeitet werden kann, und wobei die Größe des Aktivierungsanforderungsnachrichten-Verarbeitungsfensters die Anzahl von Aktivierungsanforderungsnachrichten angibt, die dem APN entsprechen und von der Gateway-Vorrichtung in der aktuellen statistischen Periode verarbeitet werden können;
Erhalten (34, 44, 54, 64) einer Anzahl der Aktivierungsanforderungsnachrichten, die dem APN entsprechen und der Gateway-Vorrichtung in der aktuellen statistischen Periode zugewiesen worden sind; Beenden des Zuweisens, wenn die Anzahl von Aktivierungsanforderungsnachrichten, die in der aktuellen statistischen Periode zugewiesen worden sind, größer ist als die Größe des Aktivierungsanforderungsnachrichten-Verarbeitungsfensters, das in der aktuellen statistischen Periode verarbeitet werden kann, der Aktivierungsanforderungsnachricht an die Gateway-Vorrichtung in der verbleibenden Zeit der aktuellen statistischen Periode; und
Zuweisen (37, 57) der Aktivierungsanforderungsnachricht an eine andere Gateway-Vorrichtung oder Verwerfen (48, 68) der Aktivierungsanforderungsnachricht.

4. Flusssteuerungsvorrichtung einer Zugriffsvorrichtung, umfassend:
Mittel zum Empfangen der Verarbeitungsfähigkeitsinformation einer Aktivierungsanforderungsnachricht, die von einer Gateway-Vorrichtung gesendet wird, wobei die Verarbeitungsfähigkeitsinformation der Aktivierungsanforderungsnachricht einem der Steuerung unterliegenden Zugangspunktnamen (Access Point Name, APN) entspricht, der von der Gateway-Vorrichtung bestimmt wird, und die Verarbeitungsfähigkeitsinformation der Aktivierungsanforderungsnachricht ein Durchflusssteuerungsverhältnis ist, wobei das Durchflusssteuerungsverhältnis sich auf ein Verhältnis einer Anzahl von Aktivierungsanforderungsnachrichten, die in einer aktuellen statistischen Periode verarbeitet werden können, zu einer Anzahl von Aktivierungsanforderungsnachrichten bezieht, die in einer vorherigen statistischen Periode verarbeitet wurden;
Mittel zum Empfangen der Aktivierungsanforderungsnachricht, die von einem Endgerät gesendet wird; und
Mittel zum Durchführen der Flusssteuerung für eine Verarbeitungsprozedur der Aktivierungsanforderungsnachricht gemäß der Verarbeitungsfähigkeitsinformation der Aktivierungsanforderungsnachricht, welches umfasst:
Mittel zum Berechnen, gemäß der Verarbeitungsfähigkeitsinformation der Aktivierungsanforderungsnachricht, einer Größe eines Aktivierungsanforderungsnachrichten-Verarbeitungsfensters, das dem APN entspricht und durch die Gateway-Vorrichtung in einer aktuellen statistischen Periode verarbeitet werden kann, und wobei die Größe des Aktivierungsanforderungsnachrichten-Verarbeitungsfensters die Anzahl von Aktivierungsanforderungsnachrichten angibt, die dem APN entsprechen und von der Gateway-Vorrichtung in der aktuellen statistischen Periode verarbeitet werden können;
Mittel zum Erhalten der Anzahl von Aktivierungsanforderungsnachrichten, die dem APN entsprechen und der Gateway-Vorrichtung in der aktuellen statistischen Periode zugewiesen worden sind;
Mittel zum Beenden des Zuweisens, wenn die Anzahl von Aktivierungsanforderungsnachrichten, die in der aktuellen statistischen Periode zugewiesen worden sind, größer ist als die Größe des Aktivierungsanforderungsnachrichten-Verarbeitungsfensters, das in der aktuellen statistischen Periode verarbeitet werden kann, der Aktivierungsanforderungsnachricht an die Gateway-Vorrichtung in der verbleibenden Zeit der aktuellen statistischen Periode; und
Mittel zum Zuweisen der Aktivierungsanforderungsnachricht an eine andere Gateway-Vorrichtung oder Mittel zum Verwerfen der Aktivierung s anforderung s nachricht.

## Revendications

1. Procédé de contrôle de flux, consistant à :
recevoir (32, 42, 52, 62), au moyen d'un dispositif d'accès provenant d'un dispositif de passerelle, des informations de capacité de traitement d'un message de demande d'activation, dans lequel les informations de capacité de traitement du message de demande d'activation correspondent à un nom de point d'accès (APN), ayant besoin d'être contrôlé qui est déterminé par le dispositif de passerelle, et les informations de capacité de traitement du message de demande d'activation constituent une taille d'une fenêtre de traitement de message de demande d'activation et la taille de la fenêtre de traitement de message de demande d'activation indique un nombre de messages de demande d'activation qui correspond au nom APN et que le dispositif de passerelle peut charger pendant une période statistique en cours ;
recevoir (11), au moyen du dispositif d'accès, le message de demande d'activation envoyé par un terminal ; et
effectuer (12), au moyen du dispositif d'accès, un contrôle de flux sur une procédure de traitement du message de demande d'activation en fonction des informations de capacité de traitement du message de demande d'activation,
qui consiste à :
obtenir (33, 43, 53, 63), en fonction des informations de capacité de traitement du message de demande d'activation, la taille de la fenêtre de traitement de message de demande d'activation qui correspond au nom APN et peut être traitée par le dispositif de passerelle pendant la période statistique en cours ;
obtenir (34, 44, 54, 64) le nombre de messages de demande d'activation qui correspond au nom APN et qui ont été attribués au dispositif de passerelle pendant la période statistique en cours ;
arrêter l'attribution, lorsque le nombre de messages de demande d'activation qui ont été attribués pendant la période statistique en cours, est plus grand que la taille de la fenêtre de traitement de message de demande d'activation qui peut être traitée pendant la période statistique en cours, le message de demande d'activation au dispositif de passerelle, pendant le temps restant de la période statistique en cours ; et attribuer (37, 57) le message de demande d'activation à un autre dispositif de passerelle ou se débarrasser (48, 68) du message de demande d'activation.

2. Dispositif de contrôle de flux d'un dispositif d'accès, comprenant :
un moyen pour recevoir des informations de capacité de traitement d'un message de demande d'activation envoyé par un dispositif de passerelle, dans lequel les informations de capacité de traitement du message de demande d'activation correspondent à un nom de point d'accès (APN), ayant besoin d'être contrôlé qui est déterminé par le dispositif de passerelle, et les informations de capacité de traitement du message de demande d'activation constituent une taille d'une fenêtre de traitement de message de demande d'activation et la taille de la fenêtre de traitement de message de demande d'activation indique un nombre de messages de demande d'activation qui correspond au nom APN et que le dispositif de passerelle peut charger pendant une période statistique en cours ;
un moyen pour recevoir le message de demande d'activation envoyé par un terminal ;
et
un moyen pour effectuer un contrôle de flux sur une procédure de traitement du message de demande d'activation en fonction des informations de capacité de traitement du message de demande d'activation,
qui comprend :
un moyen pour obtenir, en fonction des informations de capacité de traitement du message de demande d'activation, la taille de la fenêtre de traitement de message de demande d'activation qui correspond au nom APN et peut être traitée par le dispositif de passerelle pendant la période statistique en cours ;
un moyen pour obtenir le nombre de messages de demande d'activation qui correspond au nom APN et qui ont été attribués au dispositif de passerelle pendant la période statistique en cours ;
un moyen pour arrêter l'attribution, lorsque le nombre de messages de demande d'activation qui ont été attribués pendant la période statistique en cours, est plus grand que la taille de la fenêtre de traitement de message de demande d'activation qui peut être traitée pendant la période statistique en cours, le message de demande d'activation au dispositif de passerelle, pendant le temps restant de la période statistique en cours ; et
un moyen pour attribuer le message de demande d'activation à un autre dispositif de passerelle ou
un moyen pour se débarrasser du message de demande d'activation.

3. Procédé de contrôle de flux, consistant à :
recevoir (32, 42, 52, 62), au moyen d'un dispositif d'accès envoyé par un dispositif de passerelle, des informations de capacité de traitement d'un message de demande d'activation, dans lequel les informations de capacité de traitement du message de demande d'activation correspondent à un nom de point d'accès (APN), ayant besoin d'être contrôlé qui est déterminé par le dispositif de passerelle, et les informations de capacité de traitement du message de demande d'activation constituent un rapport de contrôle de flux, où le rapport de contrôle de flux se réfère à un rapport entre un nombre de messages de demande d'activation qui peuvent être traités pendant une période statistique en cours, et un nombre de message de demande d'activation qui ont été traités pendant une précédente période statistique ;
recevoir (11), au moyen du dispositif d'accès, le message de demande d'activation envoyé par un terminal ; et
effectuer (12), au moyen du dispositif d'accès, un contrôle de flux sur une procédure de traitement du message de demande d'activation en fonction des informations de capacité de traitement du message de demande d'activation, qui consiste à :
calculer (33, 43, 53, 63), en fonction des informations de capacité de traitement du message de demande d'activation, une taille d'une fenêtre de traitement de message de demande d'activation qui correspond au nom APN et peut être traitée par le dispositif de passerelle pendant la période statistique en cours, et la taille de la fenêtre de traitement de message de demande d'activation indique le nombre de messages de demande d'activation qui correspond au nom APN et peuvent être traités par le dispositif de passerelle pendant une période statistique en cours ;
obtenir (34, 44, 54, 64) un nombre de messages de demande d'activation qui correspond au nom APN et qui ont été attribués au dispositif de passerelle pendant la période statistique en cours ;
arrêter l'attribution, lorsque le nombre de messages de demande d'activation qui ont été attribués pendant la période statistique en cours, est plus grand que la taille de la fenêtre de traitement de message de demande d'activation qui peut être traitée pendant la période statistique en cours, le message de demande d'activation au dispositif de passerelle, pendant le temps restant de la période statistique en cours ; et attribuer (37, 57) le message de demande d'activation à un autre dispositif de passerelle ou se débarrasser (48, 68) du message de demande d'activation.

4. Dispositif de contrôle de flux d'un dispositif d'accès, comprenant :
un moyen pour recevoir des informations de capacité de traitement d'un message de demande d'activation envoyé par un dispositif de passerelle, dans lequel les informations de capacité de traitement du message de demande d'activation correspondent à un nom de point d'accès (APN), ayant besoin d'être contrôlé qui est déterminé par le dispositif de passerelle, et les informations de capacité de traitement du message de demande d'activation constituent un rapport de contrôle de flux, où le rapport de contrôle de flux se réfère à un rapport entre un nombre de messages de demande d'activation qui peuvent être traités pendant une période statistique en cours, et un nombre de message de demande d'activation qui ont été traités pendant une précédente période statistique ;
un moyen pour recevoir le message de demande d'activation envoyé par un terminal ; et
un moyen pour effectuer un contrôle de flux sur une procédure de traitement du message de demande d'activation en fonction des informations de capacité de traitement du message de demande d'activation, qui comprend :
un moyen pour calculer, en fonction des informations de capacité de traitement du message de demande d'activation, une taille d'une fenêtre de traitement de message de demande d'activation qui correspond au nom APN et qui peut être traitée par le dispositif de passerelle pendant la période statistique en cours, et la taille de la fenêtre de traitement de message de demande d'activation indique un nombre de messages de demande d'activation qui correspond au nom APN et qui peuvent être traités par le dispositif de passerelle pendant une période statistique en cours ;
un moyen pour obtenir le nombre de messages de demande d'activation qui correspond au nom APN et qui ont été attribués au dispositif de passerelle pendant la période statistique en cours ;
un moyen pour arrêter l'attribution, lorsque le nombre de messages de demande d'activation qui ont été attribués pendant la période statistique en cours, est plus grand que la taille de la fenêtre de traitement de message de demande d'activation qui peut être traitée pendant la période statistique en cours, le message de demande d'activation au dispositif de passerelle, pendant le temps restant de la période statistique en cours ; et
un moyen pour attribuer le message de demande d'activation à un autre dispositif de passerelle ou
un moyen pour se débarrasser du message de demande d'activation.
